Europäisches Patentamt

European Patent Office

Office européen des brevets

(19)

(11) Numéro de publication: **0 107 574**
A1

# (12) DEMANDE DE BREVET EUROPEEN

(21) Numéro de dépôt: 83401989.5

(51) Int. Cl.³: **B 21 J 15/00**

(22) Date de dépôt: 12.10.83

(30) Priorité: 14.10.82 FR 8217222

(43) Date de publication de la demande: 02.05.84
Bulletin 84/18

(84) Etats contractants désignés: BE CH DE GB IT LI NL SE

(71) Demandeur: **AERO-TECHNIC S.A., Zone Industrielle des
Béthunes 1 rue du Limousin,
F-95310 Saint-Ouen-L'aumone (FR)**

(72) Inventeur: **Plouvier, Max Serge, 35 avenue de la Division
Leclerc, F-95350 St. Brice Sous Foret (FR)**

(74) Mandataire: **Durand, Yves Armand Louis et al, Cabinet Z.
Weinstein 20, Avenue de Friedland, F-75008 Paris (FR)**

(54) **Presse riveteuse perfectionnée avec limiteur d'effort.**

(57) La présente invention concerne une presse riveteuse perfectionnée.

Cette presse, portative ou non, comprend essentiellement
un outil de travail (1) adaptable sur un vérin à double effet (3)
auquel est associé un limiteur de pression (4) avec ressort de
tarage (5), une pièce annulaire (2) étant solidaire de l'outil (1)
et comportant un chambrage (9) coopérant avec un piston pilote (19) en liaison hydraulique permanente isolée avec un piston
auxiliaire (20) qui assure le tarage automatique du ressort (5)
lors du montage de l'outil (1) sur le vérin (3).

La presse de l'invention permet par exemple des opérations de rivetage sans risque de dépasser la force d'écrasement
maximale autorisée par l'outil.

0107574

-1-

<u>Presse riveteuse perfectionnée avec limiteur d'effort</u>

La présente invention se rapporte d'une manière
générale à une presse à riveter perfectionnée et elle
concerne plus particulièrement le dispositif limiteur
de pression associé au vérin équipant cette presse.

On connaît déjà des appareils à riveter portatifs ou
non comprenant un outil de travail en forme de C et
adaptable sur un vérin à double effet auquel est
associé un limiteur de pression avec ressort de tarage
à précontrainte réglable. Sur ces appareils, on tarait
le ressort du limiteur de pression au moyen d'un
bouton de réglage qui permettait d'afficher la force
maximale de service que pouvait supporter l'outil
en forme de C.

Cependant, ces appareils présentaient de gros inconvénients sur le plan de la sécurité. En effet, on sait
que, dans les opérations de rivetage, la force
d'écrasement doit varier en fonction notamment du
diamètre et de la nature des rivets concernés, et on
doit par conséquent utiliser un outil déterminé pour
effectuer un rivetage déterminé. Dès lors, si l'on
veut par exemple effectuer un rivetage nécessitant
une force d'écrasement de 5 tonnes, il faudra adapter
sur le vérin de la presse un outil en forme de C
capable de supporter une telle force, et le ressort
du limiteur de pression sera évidemment taré à 5 tonnes à l'aide du bouton de réglage de façon à ne pas dépasser la force maximale du C, ce qui, dans le cas contraire, provoquerait une rupture de l'outil risquant de blesser l'utilisateur. Si, d'un autre côté, on veut effectuer un rivetage nécessitant une force d'écrasement plus faible, par exemple de 2 tonnes, on pouvait changer d'outil, mais alors il convient de tarer le ressort du limiteur de pression à 2 tonnes pour éviter la rupture de l'outil qui ne peut pas supporter une force d'écrasement supérieure.

Or, il arrivait bien souvent que l'utilisateur changeant d'outil omettait d'actionner le bouton de réglage permettant de tarer le ressort à la force maximale d'écrasement admissible par l'outil. En d'autres termes, l'utilisateur omettait de régler le tarage pour chaque outil qu'il utilisait, de sorte que le bouton de tarage pouvait afficher une valeur trop forte pour le limiteur de pression alors que l'outil employé était trop faible et incapable d'encaisser la force d'écrasement affichée. Il en résultait par conséquent une rupture ou une cassure de l'outil de travail, ce qui pouvait évidemment blesser l'utilisateur de la presse.

La présente invention a pour but essentiel de remédier aux inconvénients ci-dessus en proposant une presse riveteuse perfectionnée permettant un réglage automatique de la force d'écrasement en fonction de l'outil ou C adapté sur la presse, et assurant une sécurité totale pour l'utilisateur de ladite presse.

A cet effet, l'invention a pour objet une presse perfectionnée et destinée par exemple à effectuer des opérations de rivetage, du type comprenant un outil de travail interchangeable admettant une force maximale de service et adaptable sur un vérin à double effet auquel est associé un limiteur de pression avec ressort de tarage à précontrainte réglable, caractérisée en ce que le tarage du ressort précité est réalisé automatiquement à la valeur désirée par la manoeuvre de montage de l'outil de travail correspondant.

On comprend donc déjà que, contrairement aux appareils à riveter antérieurs, l'utilisateur n'est pas obligé de tarer le ressort du limiteur de pression à chaque fois qu'il change d'outil, puisque ce tarage s'effectuera automatiquement pour chaque outil ou C utilisé.

Suivant une autre caractéristique de l'invention, le tarage du ressort précité est obtenu par un piston auxiliaire en liaison hydraulique permanente isolée avec un piston pilote déplaçable par l'outil de travail au cours du montage de ce dernier.

Suivant encore une autre caractéristique de l'invention, le piston pilote précité est monté coulissant à l'extrémité du corps du vérin dont il fait saillie pour coopérer avec un chambrage ménagé dans une pièce annulaire solidaire de l'outil et s'adaptant sur le corps de vérin, la longueur de ce chambrage correspondant à la force maximale de service de l'outil.

On comprend donc qu'à chaque outil, sera associée une pièce annulaire s'adaptant sur le vérin et dont le chambrage aura une longueur différente d'un outil à l'autre, et correspondant à la force d'écrasement maximale que peut supporter cet outil.

Suivant une autre caractéristique de l'invention, le piston pilote précité agit sur un circuit hydraulique fermé et indépendant, ménagé au moins en partie dans le corps du vérin et comprenant une chambre de travail fermée d'un côté par le piston auxiliaire précité et de l'autre par un bouton de réglage fin de la pression du fluide hydraulique dans ledit circuit.

On précisera ici que, suivant une autre caractéristique de l'invention, le piston pilote précité est annulaire et concentrique au piston du vérin, tandis que le piston auxiliaire précité est sollicité par un ressort agencé concentriquement au ressort précité de tarage du limiteur de pression.

Suivant encore une autre caractéristique de l'invention, la pièce annulaire précitée d'adaptation de l'outil est vissée sur un manchon prolongeant et solidaire de l'extrémité du corps de vérin, lequel manchon est muni d'une bague se logeant dans un évidement de ladite pièce annulaire et formant une butée de fin de course du piston pilote après démontage de l'outil.

On ajoutera encore ici que, suivant l'invention, la pièce annulaire d'adaptation précitée est définitivement montée par collage, soudage ou analogue à l'une des extrémités d'une pièce en forme de C formant outil de rivetage, l'extrémité active de la tige de piston du vérin coulissant dans le manchon précité ainsi que dans ladite pièce annulaire pour pouvoir effectuer un rivetage contre l'autre extrémité du C.

Suivant encore une autre caractéristique de l'invention, le limiteur de pression, le piston auxiliaire et le bouton de réglage fin précités sont agencés axialement dans un bloc solidaire du corps de vérin.

La presse à riveter de l'invention est avantageusement munie d'un joint tournant assurant la connexion

-5-

hydraulique et pneumatique avec le vérin et associé de préférence au bloc précité.

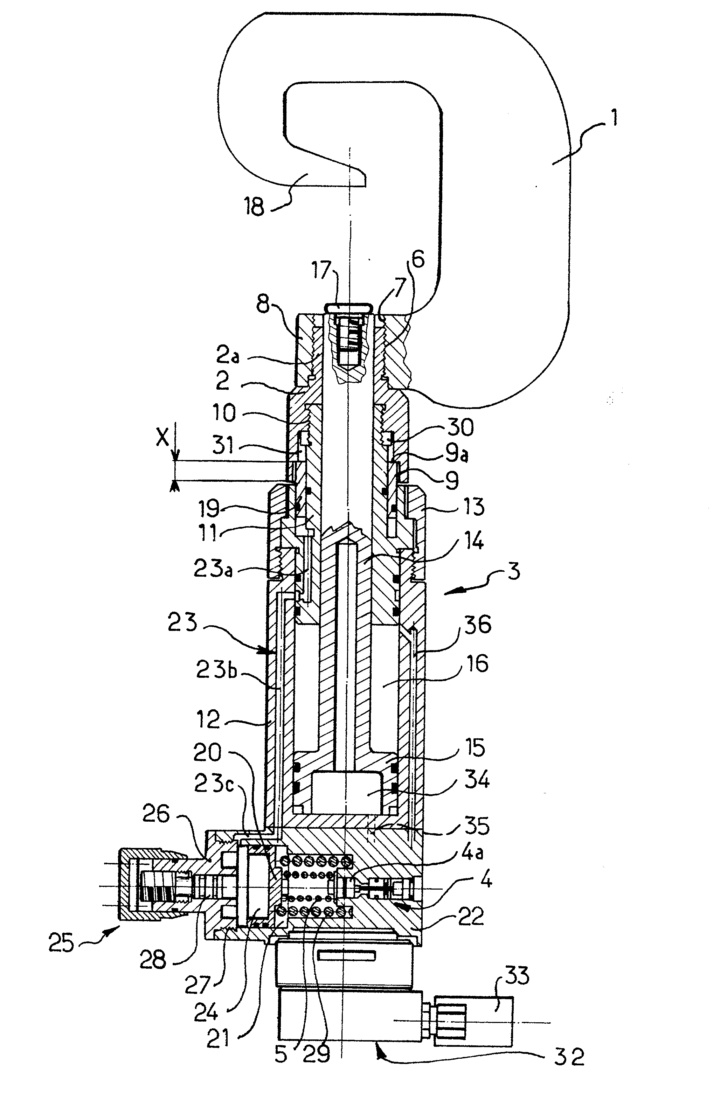

Mais d'autres caractéristiques et avantages de l'invention apparaîtront mieux dans la description détaillée qui suit et se réfère au dessin unique annexé, donné uniquement à titre d'exemple, et montrant en coupe axiale un appareil à riveter conforme aux principes de l'invention.

Suivant un exemple de réalisation, et en se reportant à la figure unique annexée, une presse riveteuse conforme à l'invention comprend essentiellement un outil 1 en forme de C équipé d'une pièce annulaire 2 s'adaptant sur un vérin 3 à double effet auquel est associé un limiteur de pression 4 avec ressort de tarage 5.

Plus précisément, la pièce annulaire 2 est fixée en 6 dans un alésage 7 pratiqué à l'une 8 des extrémités du C 1, et ce par tout moyen approprié, tel que par exemple emmanchement à force, collage, soudage ou analogue. Ainsi, la pièce annulaire 2 est fixée à demeure sur le C 1.

La pièce 2 comporte, à sa partie inférieure, un chambrage 9 dont la longueur X correspond à la force maximale d'écrasement à ne pas dépasser pour l'outil 1 concerné, comme on l'expliquera en détail ultérieurement.

La pièce annulaire 2, solidaire de l'outil 1, est fixée de manière amovible à l'extrémité du vérin 3 par tout moyen approprié, tel que par vissage, par exemple, comme on l'a montré en 10. Plus précisément, la pièce 2 est vissée sur un manchon 11 qui prolonge en quelque sorte le corps 12 du vérin 3 auquel il est fixé par un écrou de blocage 13. Comme on le voit clairement sur la figure, le manchon 11, ainsi que la partie supérieure 2a de la pièce annulaire 2 constituent un guidage pour la tige 14 du piston 15 coulissant dans la chambre 16 du corps de vérin 12. L'extrémité de la tige coulissante 14 est munie, comme connu en soi, d'une bouterolle 17 qui permettra le rivetage de pièces diverses contre l'autre extrémité 18 du C formant l'outil 1.

Le chambrage 9, ou plus précisément l'épaulement 9a de ce chambrage, coopère avec un piston pilote 19 qui, comme on le voit bien sur la figure, fait saillie du vérin 3, c'est-à-dire plus précisément du manchon 11 dans lequel il coulisse.

On a montré en 20 un piston auxiliaire coulissant dans un cylindre 21 ménagé dans un bloc 22 solidaire du corps 12 du vérin 3. Le ressort de tarage 5 du limiteur de pression 4 prend appui sur le piston auxiliaire 20 qui est en liaison hydraulique permanente isolée avec le piston pilote 19 déplaçable par la pièce annulaire 2 au cours du montage de l'outil de travail 1. Plus précisément, le piston pilote 19 agit sur un circuit hydraulique fermé et indépendant constitué par une conduite 23 débouchant dans une chambre de travail 24 fermée d'un côté par le piston auxiliaire 20 et de l'autre par un bouton 25 de réglage fin de la pression de fluide hydraulique dans la chambre 24. Comme on le voit bien sur la figure, la conduite 23 se compose d'un tronçon de conduite 23a ménagé dans le manchon 11, d'un tronçon de conduite 23b prévu dans le corps de vérin 12 et d'un tronçon de conduite 23c ménagé dans le bloc 22. Par ailleurs, on voit également sur la figure que le bouton 25 est monté rotatif sur une douille 26 montée de manière étanche en 27 sur le bloc 22, ledit bouton 25 étant

0107574

-7-

susceptible d'actionner un piston 28 fermant la chambre de travail 24.

Le piston auxiliaire 20 est constamment sollicité par un ressort 29 vers le bouton 25, ce ressort étant agencé concentriquement au ressort 5 de tarage du limiteur de pression 4. On remarquera ici que le limiteur de pression 4, les ressorts 5 et 29, le piston auxiliaire 20 et le bouton 25 avec son piston 28 sont agencés axialement dans le bloc 22 solidaire du corps 12 du vérin 3.

On a montré en 30 une bague vissée sur le manchon 11, laquelle bague se loge dans un évidement 31 de la pièce annulaire 2, lorsque celle-ci est en position montée sur le manchon 11. Cette bague 30 constitue une butée de fin de course pour le piston pilote 19 après démontage de l'ensemble outil 1-pièce annulaire 2.

Un joint tournant 32 est monté sur le bloc 22, ce joint assurant la connexion hydraulique et pneumatique avec le vérin 3. On a montré schématiquement en 33 l'arrivée de fluide hydraulique et d'air parvenant à la chambre 16 du vérin 3. Selon une réalisation préférée, l'actionnement ou la sortie en position active de la tige 14 du piston 15 sera effectuée par la pression du fluide hydraulique parvenant dans l'espace 34 par la conduite montrée partiellement en 35, tandis que le retour de la tige du piston 15 sera effectué par de l'air comprimé passant dans la conduite 36 ménagée dans le corps 12 du vérin.

On ne décrira pas ici le circuit de commande hydraulique et pneumatique qui est associé à l'appareil de rivetage qui vient d'être décrit, car ce circuit ne fait pas partie de la présente invention et il n'a d'ailleurs pas été représenté. On ne fera donc que mentionner quelques éléments de ce circuit pour une meilleure compréhension des explications qui vont suivre relativement au fonctionnement de l'appareil.

Tout d'abord, l'utilisateur doit monter l'outil 1 et sa pièce annulaire associée 2 à l'extrémité du manchon 11, étant bien entendu qu'il utilisera un outil 1 correspondant à la force d'écrasement recherchée pour effectuer le rivetage. C'est dire que l'épaulement 9a du chambrage 9 repoussera le piston pilote 19 qui effectuera une course déterminée et fonction de la longueur X dudit chambrage. Ainsi le circuit hydraulique indépendant et fermé 23, 24 sera mis sous une pression déterminée et correspondant à la longueur X, ladite pression permettant le bandage et par suite le tarage automatique du ressort 5 du limiteur de pression 4 à la force maximale de service correspondant à l'outil 1 ou C choisi. On pourra éventuellement, bien que cela ne soit pas forcément nécessaire, parfaire le tarage à l'aide du bouton ou vernier 25. Il est important de remarquer ici que si l'on veut changer d'outil 1 pour effectuer un rivetage exigeant une force d'écrasement différente, à ce nouvel outil sera associée une pièce annulaire 2 avec chambrage 9 de longueur différente et permettant d'obtenir automatiquement un tarage approprié comme expliqué précédemment, de sorte qu'on ne pourra jamais dépasser la force d'écrasement admissible par l'extrémité 18 de l'outil 1, et qu'on ne risquera pas de casser l'outil et de provoquer des accidents. A cet égard, on peut noter ici que plus le chambrage 9 sera courte, plus la force maximale de tarage sera grande. A contrario, plus le chambrage sera long, plus la force de tarage sera faible.

L'outil 1 ayant donc été monté sur le vérin 3 en réalisant simultanément et automatiquement le tarage du limiteur de débit 4, l'appareil fonctionnera de la façon suivante.

On partira de la position visible sur la figure et pour laquelle le piston 15 se trouve en position basse et inactive sous l'effet de l'air comprimé parvenant par la conduite 36.

Par action sur un moyen non représenté, tel que par exemple une pédale, on met à l'atmosphère le circuit de commande ce qui permet l'alimentation de moteurs pneumatiques et l'actionnement d'une vanne permettant l'admission de fluide hydraulique par le conduit 35 dans l'espace 34.

Le piston 15 et sa tige associée 14 vont alors se déplacer progressivement jusqu'à la pression maximum réglée automatiquement par la pièce annulaire 2 de l'outil 1 comme expliqué précédemment.

Lorsque cette pression correspondant à la force d'écrasement maximum que peut supporter l'outil est atteinte, le limiteur de pression 4, d'un type connu en soi, entre en action par son petit piston 4a qui comprime le ressort de tarage 5, ce qui rétablit le réseau d'air comprimé, inverse la vanne mentionnée précédemment et provoque l'arrêt d'admission de fluide hydraulique dans l'espace 34.

Autrement dit la chute de pression hydraulique dans l'espace 34 provoquera le retour automatique du piston 15 à son point de départ sous l'effet de la pression d'air dans la chambre 16.

Il faut dire ici que le fonctionnement qui a été décrit ci-dessus d'une manière très générale est obtenu à l'aide de moyens bien connus, de même que l'on connaissait déjà les limiteurs de pression comme celui montré en 4 sur la figure. Mais, ce qui est essentiel, selon la présente invention, ce sont les moyens décrits au début de la présente description et permettant le tarage automatique du limiteur de débit par l'intermédiaire d'une pièce annulaire solidaire de l'outil et qui, du simple fait de son montage sur le vérin permet de réaliser le tarage adéquat et correspondant à l'outil choisi.

On a donc réalisé suivant l'invention une presse riveteuse sur laquelle peut être adaptée une multiplicité d'outils qui, au fonctionnement de la presse, ne risquent pas d'être détériorés ni de blesser le personnel en cas de rupture.

Bien entendu, l'invention n'est nullement limitée au mode de réalisation décrit et illustré qui n'a été donné qu'à titre d'exemple. C'est ainsi que l'invention pourrait parfaitement s'appliquer à des appareils utilisant des outils autres que ceux présentant la forme particulière en C qui a été décrite et représentée.

De même, le piston pilote 19 qui est ici concentrique à la tige 14 du piston 15 du vérin 3, pourrait tout simplement être constitué par un petit piston sur un seul côté du vérin 3. On pourrait également prévoir pour la chambre de travail 24 une autre forme que celle représentée, sans sortir du cadre de l'invention. Enfin les divers joints d'étanchéité entre les différentes pièces de l'appareil n'ont pas été décrits, mais pourraient être d'un type quelconque.

C'est dire que l'invention comprend tous les équivalents techniques des moyens décrits ainsi que leurs combinaisons si celles-ci sont effectuées suivant l'esprit de l'invention.

0107574

-11-

Revendications

1. Presse perfectionnée et destinée par exemple à effectuer des opérations de rivetage, du type comprenant un outil de travail interchangeable admettant une force maximale de service et adaptable sur un vérin à double effet auquel est associé un limiteur de pression avec ressort de tarage à précontrainte réglable, caractérisée en ce que le tarage du ressort précité (5) est réalisé automatiquement à la valeur désirée par la manoeuvre de montage de l'outil de travail correspondant (1).

2. Presse suivant la revendication 1, caractérisée en ce que le tarage du ressort précité (5) est obtenu par un piston auxiliaire (20) en liaison hydraulique permanente isolée avec un piston pilote (19) déplaçable par l'outil de travail (1) au cours du montage de ce dernier.

3. Presse suivant la revendication 1 ou 2, caractérisée en ce que le piston pilote précité (19) est monté coulissant à l'extrémité du corps du vérin précité (3) dont il fait saillie pour coopérer avec un chambrage (9) ménagé dans une pièce annulaire (2) solidaire de l'outil (1) et s'adaptant sur ledit corps de vérin (3), la longueur (X) de ce chambrage (9) correspondant à la force maximale de service de l'outil (1).

4. Presse suivant l'une des revendications 1 à 3, caractérisée en ce que le piston pilote précité (19) agit sur un circuit hydraulique fermé et indépendant ménagé au moins en partie dans le corps (12) du vérin (3) et comprenant une chambre de travail (24) fermée d'un côté par le piston auxiliaire précité (20) et de l'autre par un bouton (25) de réglage fin de

0107574

-12-

la pression du fluide hydraulique dans ledit circuit.

5. Presse suivant l'une des revendications 1 à 4, caractérisée en ce que le piston pilote précité (19) est annulaire et concentrique à la tige (14) du piston (15) du vérin (3) tandis que le piston auxiliaire précité (20) est sollicité par un ressort (29) agencé concentriquement au ressort précité (5) de tarage du limiteur de pression (4).

6. Presse suivant l'une des revendications 1 à 5, caractérisée en ce que la pièce annulaire (2) d'adaptation de l'outil est vissée sur un manchon (11) solidaire de l'extrémité du corps (12) du vérin (3) et muni d'une bague (30) se logeant dans un évidement (31) de ladite pièce annulaire et formant butée de fin de course du piston pilote (19) après démontage de l'outil (1).

7. Presse suivant l'une des revendications précédentes, caractérisée en ce que la pièce annulaire d'adaptation (2) est définitivement montée par collage, soudage ou analogue à l'une (8) des extrémités d'une pièce en forme de C formant outil de rivetage (1), l'extrémité active de la tige (14) de piston (15) du vérin (3) coulissant dans le manchon précité (11) ainsi que dans ladite pièce annulaire (2) pour pouvoir effectuer un rivetage contre l'autre extrémité (18) du C (1).

8. Presse suivant l'une des revendications précédentes, caractérisée en ce que le limiteur de pression (4) avec son ressort (5), le piston auxiliaire (20) et le bouton de réglage fin (25) précités sont agencés axialement dans un bloc (22) solidaire du corps de vérin (12).

9. Presse suivant la revendication 8, caractérisée
en ce qu'un joint tournant (32) assurant la connexion
hydraulique et pneumatique avec le vérin (3) est
associé au bloc précité (22).

0107574

0107574

Office européen
des brevets

**RAPPORT DE RECHERCHE EUROPEENNE**

Numéro de la demande

EP  83 40 1989

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A- 863 638 (C. DESSOUTTER) <br> * Figure 1; revendication 1; colonne 2, lignes 38-50 * | 1 | B 21 J 15/00 |
| A | GB-A- 549 115 (BROOM AND WADE) | | |
| A | FR-A-2 306 034 (HUCK MANUFACTURING CY.) | | |

DOMAINES TECHNIQUES
RECHERCHES (Int. Cl. ³)

B 21 J
F 16 P

Le présent rapport de recherche a été établi pour toutes les revendications

| Lieu de la recherche | Date d'achèvement de la recherche | Examinateur |
|---|---|---|
| LA HAYE | 17-01-1984 | DEBOOS S.M.D. |